Europäisches Patentamt

European Patent Office

Office européen des brevets

(19)

(11) Numéro de publication: **0 231 716**
**B1**

(12)

# FASCICULE DE BREVET EUROPEEN

(45) Date de publication du fascicule du brevet:
03.10.90

(51) Int. Cl.⁵: **A21C 7/01**, A21C 7/00

(21) Numéro de dépôt: **86440100.5**

(22) Date de dépôt: **14.11.86**

(54) Dispositif pour le centrage et le formage de pièces de pâte boulangère ou similaire.

(30) Priorité: **02.12.85 FR 8517909**

(43) Date de publication de la demande:
**12.08.87 Bulletin 87/33**

(45) Mention de la délivrance du brevet:
**03.10.90 Bulletin 90/40**

(84) Etats contractants désignés:
**AT BE CH DE ES GB GR IT LI LU NL SE**

(56) Documents cités:
**FR-A- 2 145 894**
**FR-A- 2 401 614**
**FR-A- 2 500 266**
**US-A- 3 354 843**

(73) Titulaire: **Voegtlin, René, 2, rue de la Colline**
**Oberhausbergen, F-67200 Strasbourg(FR)**

(72) Inventeur: **Voegtlin, René, 2, rue de la Colline**
**Oberhausbergen, F-67200 Strasbourg(FR)**

(74) Mandataire: **Aubertin, François, Cabinet Lepage &**
**Aubertin Innovations et Prestations 4, rue de Haguenau,**
**F-67000 Strasbourg(FR)**

ACTORUM AG

**Description**

L'invention concerne un dispositif pour le centrage et le formage de pièces de pâte boulangère ou similaire s'insérant entre deux machines de traitement d'une ligne de fabrication industrielle de produits boulangers et similaire et notamment entre une diviseuse-peseuse et une chambre de préfermentation ou entre une chambre de préfermentation et une façonneuse-allongeuse ou autres machines de cette ligne.

Traditionnellement, après réalisation de la pâte, celle-ci est dirigée vers une diviseuse-peseuse débitant des pièces de pâte pour les transmettre à une bouleuse. Cette dernière confère à chaque pièce de pâte boulangère ou similaire la forme approximative d'une boule et les différentes boules sont déposées sur un tapis convoyeur. Ledit tapis convoyeur transporte les différentes pièces de pâte boulangère en forme de boule vers la chambre de préfermentation. Depuis cette dernière, un autre tapis convoyeur transporte la boule préfermentée vers une façonneuse-allongeuse lorsqu'il s'agit d'obtenir des pains longs.

En effet, si, en principe, les pièces de pâte, en provenance de la bouleuse ou de la chambre de préfermentation, ont des poids identiques, il n'en est pas de même quant à leur forme.

Théoriquement, ces pièces de pâte devraient avoir une forme de boule, mais, en pratique, elles ont l'aspect de galettes difformes et différentes entre-elles, ce qui peut nuire aux opérations suivantes.

En outre, notamment si les pièces de pâte sont amenées directement par le tapis convoyeur au laminoir d'une façonneuse-allongeuse, les pièces de pâte allongées sortant de cette machine sont désaxées entre-elles, présentent les longueurs différentes et sont déposées par ladite façonneuse-allongeuse sur un autre tapis convoyeur à cadences irrégulières.

En boulangerie artisanale, ces inconvénients sont sans grandes conséquences puisqu'un opérateur prélève manuellement les pièces de pâte allongées à la sortie de la façonneuse-allongeuse. En les déposant ensuite manuellement sur leur support de fermentation, l'opérateur rectifie les défauts qui avaient pû se produire.

Par contre, en boulangerie industrielle, les inconvénients cités ci-dessus sont très préjudiciables. De ce fait, il faut :
- soit intercaler un opérateur rectifiant manuellement ces défauts, ce qui est contraire à la recherche d'une fabrication industrielle ;
- soit intercaler des dispositifs mécaniques de rectification après façonnage, ce qui, dans l'état actuel de la technique, ne peut se faire qu'à l'aide de dispositifs empiriques.

Les irrégularités de façonnage ne proviennent généralement pas de défauts inhérents aux façonneuses-allongeuses mais proviennent fréquemment des différences d'alignement et de forme des pièces amenées par le tapis convoyeur ainsi que les différences de la cadence d'introduction de ces pièces de pâte dans le laminoir de la façonneuse-allongeuse.

Ainsi, non seulement les différences d'alignement, c'est-à-dire des pièces de pâte désaxées par rapport à l'axe de la façonneuse-allongeuse mais également les différences de forme se répercutent à la sortie de la façonneuse-allongeuse. En effet, les pâtons allongés sortant de cette machine présenteront des différences de longueurs et seront désaxés surtout quand une pièce de pâte est plus volumineuse d'un côté que de l'autre par rapport à son axe de trajet.

Même en admettant que les pièces de pâte sont acheminées à cadence régulière par le tapis convoyeur, il n'y a en général aucune garantie qu'elles sortent en pâtons allongés de la façonneuse-allongeuse en cadences régulières. En effet, lorsqu'une pièce de pâte en forme de boule tombe du tapis convoyeur sur les rouleaux du laminoir, cette pièce de pâte patine sur les rouleaux du laminoir pendant un temps variable avant que lesdits rouleaux happent cette pièce de pâte pour la laminer. Une différence de glissement de quelques dixièmes de secondes d'une boule à l'autre produit des différences notables de la cadence de sortie des pâtons allongés s'échappant de la façonneuse-allongeuse, étant donné que les boules se suivent à deux secondes et même plus rapidement en travail industriel.

Des tentatives ont déjà été faites pour remédier à ces inconvénients. On se sert, comme connu par le document US-A 3 354 843, de convoyeurs dont on relève les bords du tapis continu pour mieux centrer les pièces de pâte en vue de leur introduction dans la façonneuse-allongeuse. Dans le même but, on dispose, par exemple, un entonnoir entre le convoyeur d'amenée et le laminoir de la façonneuse. En vue d'égaliser la hauteur des pièces de pâte et de forcer leur entrée dans la façonneuse-allongeuse, on a, par exemple, placé un tapis fixe ou roulant au-dessus de l'extrémité du convoyeur d'amenée.

Ces différents moyens empiriques n'ont pas donné de résultats probants, car leur action s'est avérée insuffisamment positive pour agir contre les irrégularités des pâtons allongés en sortie de la façonneuse-allongeuse.

Par ailleurs, on connaît par le document FR-A-2.401.614 un appareil pour séparer des portions de pâte d'une masse de pâte, en particulier de boulangerie-pâtisserie pour leur donner une forme déterminée et pour les délivrer à un dispositif prévu à la suite. Cet appareil est constitué essentiellement de deux ensembles, à savoir :
- un premier ensemble pour le dosage d'une quantité déterminée de pâte. Cet ensemble comporte une trémie disposée sur un doseur. Celui-ci comprend un premier cylindre se raccordant à l'ouverture inférieure de la trémie et présentant à l'une des extrémités un piston soumis à un mouvement alternatif de va-et-vient et, à l'autre extémité, une extrémité ouverte faisant face à un coulisseau soumis à un mouvement alternatif de montée et de descente. Dans ce coulisseau est logé un second cylindre de dosage pourvu d'un piston soumis à un mouvement alternatif de va-et-vient. Le fonctionnement de ce premier ensemble est le suivant. Le coulisseau est en position haute et une certaine quantité de pâte est introduite dans l'extrémité ouverte du premier cylindre. Le piston de ce dernier pousse cette quantité de pâte dans le second cylindre de dosage. Puis, le coulisseau est ramené en position basse et le second cylindre de dosage est soumis à un mouvement de rotation, de sorte que le piston de ce second cylindre de dosage peut pousser la quantité de pâte sur l'entrée d'un second ensemble.

- un second ensemble comportant un convoyeur présentant une courroie dont le brin supérieur est soutenu près de l'extrémité d'entrée de manière que ladite courroie prend une forme d'un "V". Au-dessus de cette courroie est suspendue une plaque de formage qui, avec le convoyeur, forme un plan de roulage unique. Cette plaque de formage présente des parties latérales s'élargissant progressivement et repliées légèrement vers la courroie suivant des lignes ou arêtes longitudinales de pliage longitudinal, de sorte que l'extrémité de sortie de ladite plaque de formage forme un "V" inversé par rapport au "V" de la courroie du convoyeur. La plaque de formage, présentant à son extrémité d'entrée, un axe de rotation dont les deux extrémités latérales peuvent coulisser verticalement sur une hauteur limitée, peut basculer autour d'un axe longitudinal central et autour d'un axe transversal à l'aide d'une articulation à rotule placée sur l'axe longitudinal central et reliant la plaque de formage à une barre de support transversale. Pour limiter le basculement latéral de la plaque de formage selon l'axe longitudinal central, on dispose le long du convoyeur deux guides latéraux entre lesquels pivote verticalement ladite plaque de formage.

Toutefois, cet appareil ne peut être incorporé dans une ligne de fabrication industrielle de produits de boulangerie à cadence élevée. En effet, si plusieurs pièces de pâte sont situées entre le convoyeur et la planche de roulage de l'appareil, l'action combinée du convoyeur et de la planche de roulage n'est effective que sur une seule pièce de pâte et le formage des autres pièces de pâte se ferait au détriment de la première pièce. De ce fait, il ne faut qu'une seule pièce de pâte en prise entre le convoyeur et la planche de roulage et pour l'introduction d'une nouvelle pièce de pâte dans le second ensemble, il faut attendre que la pièce de pâte précédente ait quitté l'appareil. Il est certain que ceci ralentit considérablement la cadence de roulage des pièces de pâte dans l'appareil antérieur.

La présente invention a pour but de remédier à ces inconvénients. L'invention, telle qu'elle est caractérisée dans les revendications, résout le problème consistant à créer un dispositif pour le centrage et le formage de pièces de pâte boulangère ou similaire s'insérant entre deux machines de traitement d'une ligne de fabrication industrielle de produits boulangers ou similaire, et notamment entre une diviseuse-peseuse et une chambre de préfermentation ou entre une chambre de préfermentation et une façonneuse-allongeuse ou autres machines de cette ligne, comportant, pour l'entraînement par roulement de la pièce de pâte versée, par un convoyeur d'amenée situé à l'entrée du dispositif, entre deux glissières de guidage et introduite par un goulot de centrage, situé en aval des glissières de guidage entre deux parois verticales parallèles d'un canal de formage conférant à la pièce de pâte deux plans parallèles verticaux, un tapis sans fin pourvu d'un crantage constitué par des barrettes coopérant avec des barrettes de palettes égalisatrices agissant successivement sur le dessus de la pièce de pâte.

Selon une autre caractéristique de l'invention, le dispositif, intercalé entre le tapis convoyeur et le laminoir de la façonneuse-allongeuse, comporte un canal de formage présentant des palettes dont la dernière coopère avec des moyens de frappe introduisant positivement la pièce de pâte entre les rouleaux du laminoir de la façonneuse-allongeuse.

Les avantages obtenus grâce à cette invention consistent essentiellement en ce que le dispositif recentre positivement les pièces de pâte tout en leur conférant à chacune une forme cylindrique rigoureusement identique pour la suite de la fabrication industrielle des produits de boulangerie et/ou similaire. Un autre avantage important est obtenu par la combinaison du goulot de centrage et de formage et les moyens de frappe permettant d'éviter que les pâtons allongés en provenance de la façonneuse-allongeuse sortent à cadences variables mais que, par contre, la cadence de sortie est régulière et correspond à la cadence d'entrée. Cette régularité de cadence est très importante lorsque les pâtons allongés sont dirigés en continu vers le tunnel de fermentation finale, le tunnel de cuisson ou de surgélation.

Un autre avantage consiste en ce que le dispositif peut, en remplacement de la bouleuse, être intercalé entre la diviseuse-peseuse et la chambre de préfermentation, ce dispositif recentrant positivement ces pièces de pâte en leur conférant à chacune la forme cylindrique rigoureusement identique.

Selon une utilisation préférentielle, ce dispositif, intercalé entre un tapis convoyeur d'amenée et une façonneuse-allongeuse permet en plus, d'introduire les pièces de pâte sans glissement, ni hésitation entre les rouleaux du laminoir de la façonneuse-allongeuse.

L'invention est exposée ci-après plus en détail à l'aide de dessins représentant seulement un mode d'exécution.

- la figure 1 représente, en vue en élévation et un coupe, le dispositif pour le centrage et le formage de pièces de pâte boulangère ou similaire, conforme à l'invention et placé entre un convoyeur d'amenée quelconque et un convoyeur d'évacuation dirigeant les pièces de pâte centrées et formées vers une machine en aval de la ligne de fabrication industrielle des produits boulangers.

- la figure 2 représente une vue en plan de ce dispositif.

- la figure 3 représente une vue en élévation et un coupe de dispositif pour le centrage, le formage et l'introduction de pièces de pâte boulangère ou similaire dans le laminoir d'une façonneuse-allongeuse quelconque placé entre un convoyeur d'amenée quelconque desdites pièces de pâte et ladite façonneuse-allongeuse équipée d'un convoyeur d'évacuation.

- la figure 4 représente une vue en plan du dispositif selon la figure 3.

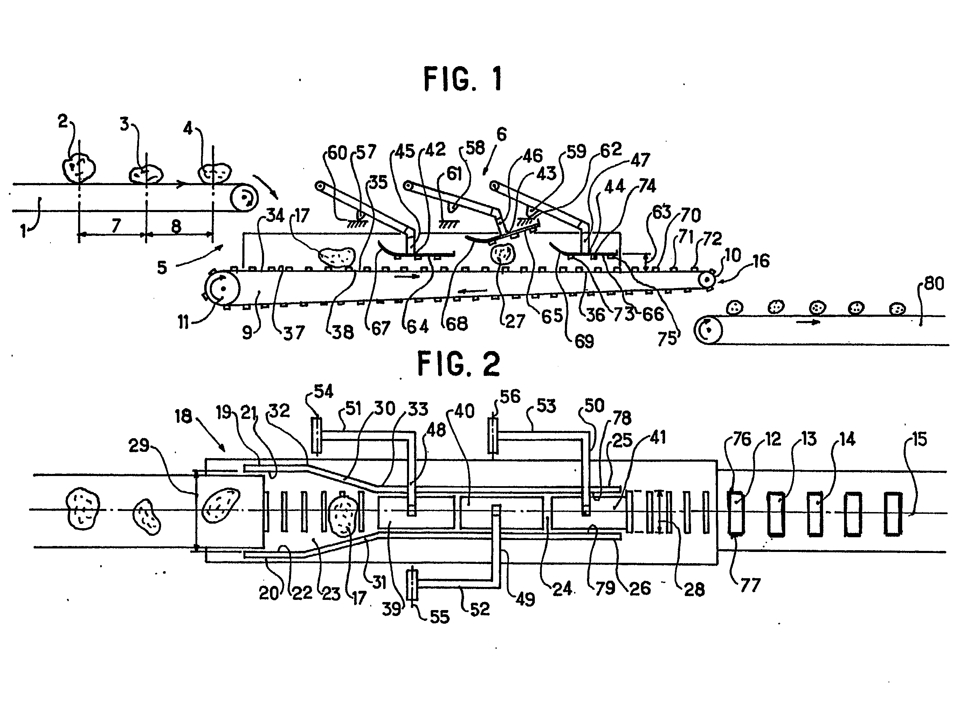

On se réfère aux figures 1 et 2.

Un convoyeur d'amenée 1 achemine des boules de pâte boulangère ou similaire, de poids identiques 2,3,4, vers l'entrée 5 d'un dispositif de centrage et de formage 6. Les distances 7,8 entre les différentes boules de pâte 2,3,4 sont égales et, de ce fait, l'arrivée desdites boules de pâte 2,3,4 vers l'entrée 5 du dispositif 6 se fait à cadence régulière.

Le dispositif 6 est constitué essentiellement d'un tapis sans fin 9 s'enroulant autour d'un tambour mené 10 et d'un tambour moteur 11, ce dernier étant situé du côté du convoyeur d'amenée 1. Pour obtenir des pièces de pâte roulées 12,13,14 de longueur égale et parfaitement centrées par rapport à l'axe général de fonctionnement 15 à la sortie 16 dudit dispositif 6, on prévoit différents moyens coopérant avec les moyens d'entraînement de la boule de pâte 17 constitués par le tapis sans fin 9.

Le premier moyen est un moyen de guidage 18, situé à l'entrée 5 du dispositif 6, et est formé de deux glissières 19,20 dont les surfaces actives intérieures 21,22 se font face. Ces deux glissières 19,20 sont largement écartées et entre celles-ci tombent les boules de pâte 2,3,4 en provenance du convoyeur d'amenée 1.

Ce premier moyen 18 est suivi d'un goulot de centrage 23 disposé entre les deux glissières 19,20 et un canal de formage 24 formé de deux parois verticales parallèles 25,26 servant de moyens de limitation des extensions latérales des pièces de pâte 27 engagées dans ledit canal de guidage 24 après passage à travers le goulot de centrage 23. La largeur intérieure 28 du canal de formage 24 est inférieure à la distance 29 séparant les deux glissières 19,20 du moyen de guidage 18. Le goulot de centrage 23 est constitué de deux parois convergentes 30, 31 reliant l'extrémité arrière 32 des glissières 19,20 à l'extrémité avant 33 des parois verticales parallèles 25,26 du canal de formage 24. Les chants inférieurs 34,35,36 respectivement des glissières 19, 20, des parois convergentes 30,31 et des parois verticales parallèles 25,26 sont quasiment en contact avec le dessus 37 du brin supérieur actif 38 du tapis sans fin 9.

Les moyens égalisateurs agissant par intermittence sur le dessus de la pièce de pâte 27 sont constitués de plusieurs palettes successives 39,40,41. Ces palettes 39,40,41 sont situées à l'extrémité 42,43,44 d'un levier 45,46,47 solidaire d'une des ailes 48,49,50 d'un bras coudé 51,52,53 pivotant dans un plan parallèle au plan du brin supérieur actif 38 du tapis sans fin 9 autour d'un axe 54,55,56. Les bras 51,52,53 sont coudés pour que les différentes palettes 39,40,41 puissent être soulevées indépendamment sans que l'une d'entre elles puisse gêner le fonctionnement de l'autre.

Ces axes 54,55,56 sont perpendiculaires à l'axe général de fonctionnement 15 et, dans l'exemple représenté dans les figures, sont situés en amont des palettes 39,40,41. Ces palettes 39,40,41, basculant autour des aces 54,55,56 viennent se placer entre les parois verticales parallèles 25,26 et ont une largeur légèrement inférieure à la largeur intérieure 28 du canal de formage 24.

Pour éviter un écrasement de la pièce de pâte 15, on limite l'abaissement des palettes 39,40,41 et on pourvoit les bras coudés 51,52,53 d'une butée 57,58,59 prenant appui contre un arrêt 60,61,62 fixe déterminant la distance 63 entre les surfaces actives 64,65,66 des palettes 39,40,41 et le dessus 37 du brin supérieur actif 38 du tapis sans fin 9. Au-fur-et-à-mesure de leur avance, les pièces de pâte 27 soulèvent successivement les différentes palettes 39,40,41. Pour éviter que lesdites pièces de pâte 27 butent contre les palettes 39,40,41, ces dernières comportent une surface d'attaque 67,68,69 incurvée vers le haut afin de faciliter la pénétration des pièces de pâte 27 entre le dessus 37 du brin supérieur actif 38 du tapis sans fin 9 et les surfaces actives 64,65,66 des palettes 39,40,41.

Pour que chaque boule de pâte 2,3,4, amenée à l'entrée 5 du dispositif 6 par le convoyeur 1 soit positivement et instantanément prise en charge, le tapis sans fin 9 comporte sur sa face externe un crantage constitué par des barrettes 70,71,72 transversales d'une longueur correspondant à la largeur intérieure 28 du canal de formage 24, ces barrettes 70,71,72 étant perpendiculaires à l'axe général de fonctionnement 15.

Par ailleurs, les surfaces actives 64,65,66 des palettes 39,40,41 sont également crantées et présentent des barrettes 73,74,75 perpendiculaires à l'axe général de fonctionnement 15.

L'action conjuguée du tapis cranté 9 et des soulèvements successifs des palettes crantées 39,40,41 égalise parfaitement les pièces de pâte 27 en leur conférant une forme cylindrique dont les deux plan parallèles 76,77 se forment par appui contre les faces internes 78,79 des parois verticales parallèles 25,26 du canal de formage 24.

Pour l'efficacité de ce traitement, il est nécessaire que chaque pièce de pâte 27 fasse plusieurs tours sur elle-même contre l'ensemble des palettes 39,40,41 pendant sa traversée du canal de formage 24.

Avec des cadences de travail élevées, au moins deux pièces de pâte 27 se trouvent dans le canal de formage 24, ce qui nécessite dans l'exemple choisi au moins trois palettes 39,40,41 indépendantes courtes puisque la présence simultanée de deux pièces de pâte 27 sous une même palette 39 ou 40 ou 41 plus longue créerait une contrariété dans le formage des pièces de pâte 27 par le poids propre de la palette qui ne peut agir correctement que sur une pièce de pâte 27 à la fois. Ainsi, le formage d'une des pièces de pâte se ferait au détriment de l'autre.

A la sortie 16 dudit dispositif 6, le tapis sans fin 9 dépose les pièces de pâte formées et centrées 12,13,14 sur un convoyeur d'évacuation 80.

Selon un autre mode d'utilisation, le dispositif 6 est intercalé entre le convoyeur d'amenée 1 et une façonneuse-allongeuse 81. Cependant, si les pièces de pâte 12,13,14 sont déposées à cadence régulière à la sortie 16 du dispositif 6, il n'est absolument pas certain qu'elles sortent en pâtons allongés 82,83 de la façonneuse-allongeuse 81 également à cadence régulière. En effet, on risque que les pièces de pâte 12,13,14 tombent du dispositif 6 sur les rouleaux 84,85 du laminoir 86 de la façonneuse-allongeuse 81, glissent sur lesdits rouleaux 84,85 pendant un temps variable avant d'être happées pour être laminées.

A cet effet, le dispositif 6 comporte des moyens de frappe 87 assurant l'introduction positive des pièces de pâte 12,13,14 dans les rouleaux 84,85 du laminoir 86 de la façonneuse-allongeuse 81.

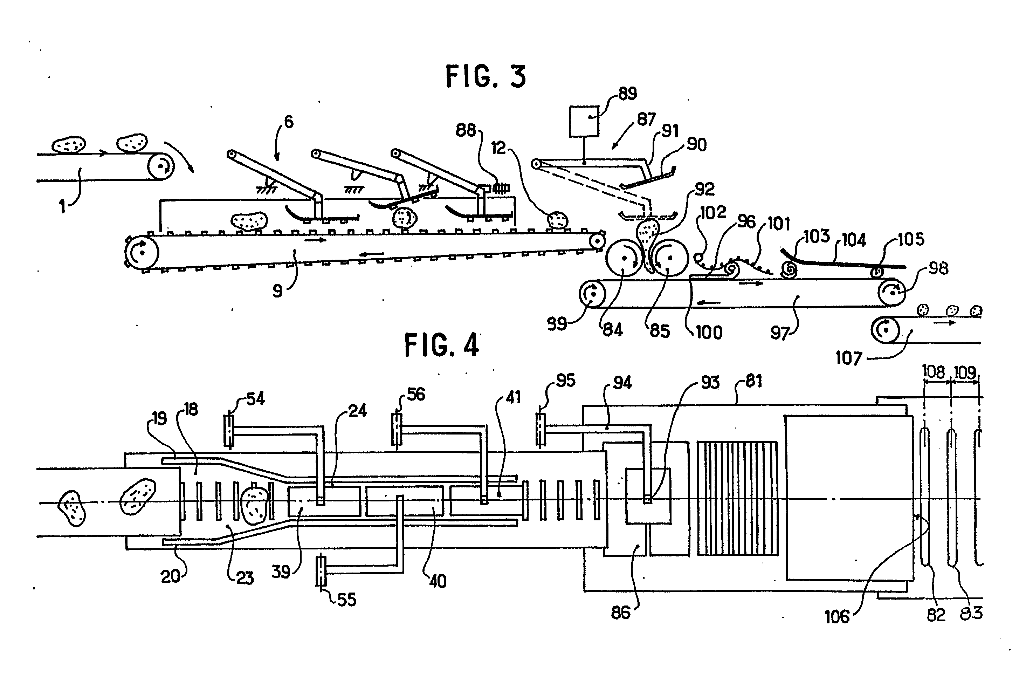

On se réfère aux figures 3 et 4.

Les moyens de frappe 87 sont positionnés au-dessus de la zone d'introduction du laminoir 86. La dernière palette 41 du dispositif 6 comporte un détecteur de préférence électrique 88. Chaque fois qu'une pièce de pâte roulée 12,13,14 quitte la dernière palette 41, cette dernière retombe par son propre poids en position de repos en sollicitant le détecteur électrique 88. Celui-ci déclenche, par l'intermédiaire d'une temporisation, un mécanisme de commande 89 qui laisse tomber la table 90 d'un marteau introducteur 91 sur le cylindre de pâte 92 se présentant à ce moment précis au-dessus de l'entrée des rouleaux 84,85 du laminoir 86 de la façonneuse-allongeuse 81, la temporisation de déclenchement étant fonction de la vitesse d'avancement et la distance à parcourir entre la fin de la dernière palette 41 et le laminoir 16.

La pièce de pâte cylindrique 92 est ainsi introduite dans le laminoir 86 de la façonneuse-allongeuse 81 sans aucune durée de glissement variable des rouleaux 84,85 du laminoir 86 sur la pièce de pâte cylindrique 92. Le marteau introducteur 91 est solidaire de l'extrémité 93 d'un bras coudé 94 pivotant autour d'un axe 95 parallèle aux axes 54,55,56 des palettes 39,40,41 du dispositif 6. Le bras coudé 94 est relié au mécanisme de commande 89. La tombée libre de la table 90 du marteau introducteur 91 est immédiatement suivie, sous l'action du mécanisme de commande 89, du relevage de cette même table 90 par l'intermédiaire du bras coudé 94 pivotant autour de l'axe 95.

Ainsi, le marteau introducteur 91 est à nouveau en position d'attente pour sa retombée sur la pièce de pâte suivante afin de maintenir une cadence régulière d'introduction dans le laminoir 86 des différentes pièces de pâte qui se suivent. La traversée des pièces de pâte à travers la façonneuse-allongeuse 81 est connue en soi.

Les deux rouleaux 84,85 du laminoir 86 sont soumis à un mouvement de rotation de sens contraires transformant le cylindre de pâte 92 en une galette 96 prise en charge par une bande transporteuse sans fin 97. Celle-ci s'enroule partiellement autour d'un tambour mené 98 et d'un tambour moteur 99. La galette 96, poussée par le brin moteur 100 de la bande transporteuse sans fin 97, s'enroule sur elle-même entre ledit brin moteur 100 et un tapis lesté 101 maintenu à l'une de ses extrémités 102.

De ce fait, on obtient un pâton court 103 venant s'intercaler entre le brin moteur 100 de la bande transporteuse sans fin 96 et une table de façonnage 104 allongeant le pâton à sa longueur définitive 105 en sortie 106 de la façonneuse-allongeuse 81.

Les pâtons allongés 82,83 sont repris en sortie 106 de la façonneuse-allongeuse 81 par un convoyeur d'évacuation 107 correspondant au convoyeur d'évacuation 80.

Grâce au dispositif de centrage et de formage 6, combiné aux moyens de frappe 87, donc d'introduction dans la façonneuse-allongeuse 81, les pâtons obtenus 82,83 sont de longueur égale, parfaitement centrés par rapport à l'axe général de fonctionnement 15 ainsi que régulièrement espacés entre eux. Les distances 108,109 étant identiques, l'acheminement des pâtons allongés 82,83 se fait en conséquence à cadence régulière.

## Revendications

1. Dispositif (6) pour le centrage et le formage de pièces de pâte (17) boulangère ou similaire s'insérant entre deux machines de traitement d'une ligne de fabrication industrielle de produits boulangers ou similaire, et notamment entre une diviseuse-peseuse et une chambre de préfermentation ou entre une chambre de préfermentation et une façonneuse-allongeuse (81) ou autres machines de cette ligne, caractérisé en ce qu'il comporte, pour l'entraînement par roulement de la pièce de pâte (17) versée, par un convoyeur d'amenée (1) situé à l'entrée (5) du dispositif (6), entre deux glissières de guidage (19,20) et introduite par un goulot de centrage (23), situé en aval des glissières de guidage (19,20) entre deux parois verticales parallèles (25,26) d'un canal de formage (24) conférant à la pièce de pâte (17) deux plans parallèles verticaux (76,77), un tapis sans fin (9) pourvu d'un crantage constitué par des barrettes (70,71,72) coopérant avec des barrettes (73,74,75) de palettes égalisatrices (39,40,41) agissant successivement sur le dessus de la pièce de pâte (17).

2. Dispositif selon la revendication 1, caractérisé en ce que le canal de formage (24) comporte une largeur intérieure (28), délimitée par les deux parois verticales parallèles (25,26), inférieure à la distance (29) séparant les deux glissières de guidage (19,20).

3. Dispositif selon la revendication 1, caractérisé en ce que le goulot de centrage (23) comporte deux parois convergentes (30,31) par rapport à l'axe général de fonctionnement (15) et aboutant, d'une part, à l'extrémité arrière (32) des glissières de guidage (19,20) et, d'autre part, à l'extrémité avant (33) des parois verticales parallèles (25,26) du canal de formage (24).

4. Dispositif selon la revendication 1, caractérisé en ce que les palettes successives (39,40,41), situées à l'extrémité (42,43,44) d'un levier (45,46,47) solidaire d'une des ailes (48,49,50) d'un bras coudé (51,52,53) pivotant autour d'un axe (54,55,56) perpendiculaire à l'axe général de fonctionnement (15) et soulevées successivement par la pièce à pâte (17), comportent une largeur légèrement inférieure à la largeur intérieure (28) du canal de formage (24) et viennent se placer entre les parois verticales parallèles (25,26) de ce dernier.

5. Dispositif selon la revendication 1, caractérisé en ce que les palettes (39,40,41) comportent une faible longueur pour que seule une pièce de pâte (17) puisse soulever une palette.

6. Dispositif selon la revendication 1, caractérisé en ce que les palettes (39,40,41) comportent une course d'abaissement limitée par une butée (57,58,59) solidaire des bras coudés (51,52,53) prenant appui contre un arrêt fixe (60,61,62) et des surfaces actives (64,65,66) pourvues de barrettes (73,74,75) perpendiculaires à l'axe général de fonctionnement (15).

7. Dispositif selon la revendication 1, caractérisé en ce que les palettes (39,40,41) comportent une surface d'attaque (67,68,69) incurvée vers le haut.

8. Dispositif selon la revendication 1, caractérisé en ce que le canal de formage (24), présentant des palettes successives (39,40,41), comporte une palette (41) coopérant avec des moyens de frappe (87) introduisant positivement la pièce de pâte (92) de forme cylindrique entre des rouleaux (84,85) d'un laminoir (86) d'une façonneuse-allongeuse (81), ces moyens de frappe (87) étant composés d'un mécanisme de commande (89) actionnée par un détecteur (88) commandé par la dernière palette (41) du canal de formage (24), d'un marteau introducteur (91) pourvu d'une table (90) tombant sur la pièce de pâte (92) de forme cylindrique disposée au-dessus de l'entrée des rouleaux (84,85) du laminoir (86) de la façonneuse-allongeuse (81), d'un bras coudé (94) pivotant autour d'un axe (95) parallèle aux axes (54,55,56) des palettes (39,40,41) et actionné par le mécanisme de commande (89), le marteau introducteur (91) étant solidaire de l'extrémité (93) du bras coudé (94) et d'un temporisateur intercalé entre le détecteur (88) et le mécanisme (89), dont la temporisation de déclenchement de la tombée du marteau introducteur (91) est fonction de la vitesse d'avancement et la distance à parcourir entre la fin de la dernière palette (41) et le laminoir (86).

9. Dispositif selon la revendication 8, caractérisé en ce que le marteau introducteur (91) comporte une tombée libre suivie immédiatement sous l'action du mécanisme de commande (89) agissant sur le bras coudé (94) d'un relevage.

**Claims**

1. Device (6) for centering and forming pieces of baking dough (17) or the like, to be inserted between two processing machines of a line for the industrial production of bakery products or the like and viz. between a dividing-weighing machine and a prerising chamber or between a prerising chamber and a shaping-elongating machine (81) or other machines of this line, characterized in that it comprises, for rollingly driving the piece of dough (17) poured, by a feeding conveyor (1) located at the inlet (5) of the device (6), between two guiding slides (19, 20) and introduced through a centering neck (23), located downstream the guiding slides (19, 20) between two parallel vertical walls (25, 26) of a forming channel (24) conferring to the piece of dough (17) two vertical parallel planes (76, 77), an endless belt (9) provided with a notching formed by strips (70, 71, 72) co-operating with strips (73, 74, 75) of equalizing blades (39, 40, 41) successively acting onto the top of the piece of dough (17).

2. Device according to claim 1, characterized in that the forming channel (24) comprises a inner width (28), defined by the two parallel vertical walls (25, 26), smaller than the distance (29) separating the two guiding slides (19, 20).

3. Device according to claim 1, characterized in that the centering neck (23) comprises two converging walls (30, 31) with respect to the general operating axis (15) and joining, on the one hand, the rear end (32) of the guiding slides (19, 20) and, on the other hand, at the front end (33) of the two parallel vertical walls (25, 26) of the forming channel (24).

4. Device according to claim 1, characterized in that the successive blades (39, 40, 41), located at the end (42, 43, 44) of a lever (45, 46, 47) integral with one of the wings (48, 49, 50) of a bent arm (51, 52, 53) pivoting about a spindle (54, 55, 56) perpendicular to the general operating axis (15) and successively lifted by the piece of dough (17), have a width slightly smaller than the inner width (28) of the forming channel (24) and come to be located between the parallel vertical walls (25, 26) of same.

5. Device according to claim 1, characterized in that the blades (39, 40, 41) comprise a small length so that only one single piece of dough (17) can lift a blade.

6. Device according to claim 1, characterized in that the blades (39, 40, 41) comprise a lowering stroke limited by a thrust (57, 58, 59) integral with the bent arms (51, 52, 53) resting against a fixed stop (60, 61, 62) and active surfaces (64, 65, 66) provided with strips (73, 74, 75) perpendicular to the general operating axis (15).

7. Device according to claim 1, characterized in that the blades (39, 40, 41) comprise an upwardly curved leading surface (67, 68, 69).

8. Device according to claim 1, characterized in that the forming channel (24), having successive blades (39, 40, 41), comprises a blade (41) co-operating with beating means (87) positively inserting the cylindrically shaped piece of dough (92) between rolls (84, 85) of a rolling-press (86) of a shaping-elongating machine (81), these beating means (87) being comprised of a control mechanism (89) actuated by a detector (88) controlled by the last blade (41) of the forming channel (24), of an insertion hammer (91) provided with a slab (90) falling onto the cylindrically shaped piece of dough (92) arranged above the inlet of the rolls (84, 85) of the rolling press (86) of the shaping-elongating machine (81), of a bent arm (94) pivoting about a spindle (95) parallel to the spindles (54, 55, 56) of the blades (39, 40, 41) and actuated by the control mechanism (89), the insertion hammer (91) being integral with the end (93) of the bent arm (94) and a timing relay inserted between the detector (88) and the mechanism (89), the tripping delay of which for the falling down of the insertion hammer (91) is dependent on the feedrate and the distance to be covered between the end of the last blade (41) and the rolling press (86).

9. Device according to claim 8, characterized in that the insertion hammer (91) comprises a free fall immediately followed, under the action of the control mechanism (89) acting onto the bent arm (94), by a raising.

## Patentansprüche

1. Vorrichtung (6) zur Zentrierung und Formung von Backteigteilen (17) oder dergleichen, die eingesetzt ist zwischen zwei Behandlungsmaschinen einer industriellen Fertigungsstraße für Backwaren oder dergleichen und nämlich zwischen einer Teilungs-/Abfülleinrichtung und einer Vorfermentierungskammer oder zwischen einer Vorfermentierungskammer und einer Formungs-/Längungseinrichtung (81) oder anderen Maschinen dieser Straße, dadurch gekennzeichnet, däß, für den Walzvortrieb des Teigteils (17), der von einem am Eingang (5) der Vorrichtung (6) befindlichen Zufuhrförderer (1), zwischen zwei Führungsgleitschienen (19, 20) ausgeschüttet und von einem stromabwärts der Führungsgleitschienen (19, 20) befindlichen Zentrierungshals (23) zwischen zwei senkrechten Parallelwänden (25, 26) eines dem Teigteil (17) zwei senkrechte parallele Ebenen (76, 77) verleihenden Formungskanals (24) eingeführt wird, ein Endlosband (9), das mit einer Rastung aus Bindeblechen (70, 71, 72) versehen ist, die mit Bindeblechen (73, 74, 75) der Ausgleichschaufeln (39, 40, 41), die aufeinanderfolgend auf der Oberseite des Teigteils (17) einwirken, zusammenarbeiten.

2. Vorrichtung nach Anspruch 1, dadurch gekennzeichnet, daß der Formungskanal (24) eine von den beiden senkrechten Parallelwänden (25, 26) begrenzte innere Breite (28) umfaßt, die kleiner ist als die die Führungsgleitschienen trennende Entfernung (29).

3. Vorrichtung nach Anspruch 1, dadurch gekennzeichnet, daß der Zentrierungshals (23) zwei Wände (30, 31) umfaßt, die gegenüber der allgemeinen Funktionsachse (15) zusammenlaufen und einerseits an das hintere Ende (32) der Führungsgleitschienen (19, 20) und andererseits an das vordere Ende (33) der senkrechten Parallelwände (25, 26) des Formungskanals (24) anstoßen.

4. Vorrichtung nach Anspruch 1, dadurch gekennzeichnet, daß die aufeinanderfolgenden Schaufeln (39, 40, 41), die sich am Ende (42, 43, 44) eines Hebels (45, 46, 47) befinden, der fest mit einem der Flügel (48, 49, 50) eines knieförmigen Armes (51, 52, 53) verbunden ist, der um eine senkrecht zur allgemeinen Funktionsachse (15) stehende Achse (54, 55, 56) schwenkbar ist, und die aufeinanderfolgend vom Backteil (17) angehoben werden, eine Breite umfassen, die geringfügig kleiner ist als die Innenbreite (28) des Formungskanals (24) und sich zwischen die senkrechten Parellelwände (25, 26) dieses letzten legen.

5. Vorrichtung nach Anspruch 1, dadurch gekennzeichnet, daß die Schaufeln (39, 40, 41) von nur geringer Länge sind, sodaß nur ein Teigteil (17) eine Schaufel anheben kann.

6. Vorrichtung nach Anspruch 1, dadurch gekennzeichnet, daß die Schaufeln (39, 40, 41) einen Absenkungshub, der durch einen Anschlag (57, 58, 59) begrenzt ist, der mit einem gegen eine ortsfeste Sperre (60, 61, 62) anliegenden knieförmigen Arm (51, 52, 53) fest verbunden ist, und Wirkflächen (64, 65, 66), die mit senkrecht zur allgemeinen Funktionsachse (15) verlaufenden Bindeblechen (73, 74, 75) versehen sind, umfassen, 7. Vorrichtung nach Anspruch 1, dadurch gekennzeichnet, daß die Schaufeln (39, 40, 41) eine Stirnfläche (67, 68, 69) umfassen, die nach oben gewölbt ist.

8. Vorrichtung nach Anspruch 1, dadurch gekennzeichnet, daß der Formungskanal (24), der die aufeinanderfolgenden Schaufeln (39, 40, 41) aufweist, eine Schaufel (41) umfaßt, die zusammenarbeitet mit Schlagmitteln (87), die den zylinderfönnigen Teigteil (92) positive zwischen Walzen (84, 85) eines Walzwerks (86) einer Formungs-/Längungseinrichtung (81) einführen, wobei diese Schlagmittel (87) bestehen aus einem Steuerungsmechanismus (89), der von einem Detektor (88) betätigt wird, der von der letzten Schaufel (41) des Formungskanals (24) gesteuert wird, einem Eintreibungshammer (91), der mit einer Tafel (90) versehen ist, die auf den zylinderförmigen Teigteil (92) niederkommt, der sich über dem Eingang der Walzen (84, 85) eines Walzwerks (86) einer Formungs-/Längungseinrichtung (81) befindet, einem knieförmigen Arm (94), der um eine parallel zu den Achsen (54, 55, 56) der Schaufeln (39, 40, 41) liegende Achse (95) schwenkbar ist und vom Steuerungsmechanismus (89) betätigt wird, wobei der Eintreibungshammer (91) fest mit dem Ende (93) des knieförmigen Armes (94) und dem zwischen den Detektor (89) und den Steuerungsmechanismus (89) geschalteten Verzögerer verbunden ist, dessen zeitverzögerte Auslösung des Niederkommens des Eintreibungshammers (91) von der Vorschubgeschwindigkeit und von der zwischen dem Ende der letzten Schaufel (41) und dem Walzwerk (86) zu durchlaufenden Entfernung abhängig ist.

9. Vorrichtung nach Anspruch 8, dadurch gekennzeichnet, daß der Eintreibungshammer (91) einen freien Fall hat, auf den unmittelbar, durch die Wirkung des auf den knieförmigen Arm (94) einwirkenden Steuerungsmechanismus (89), eine Anhebung folgt.

FIG. 1

FIG. 2

FIG. 3

FIG. 4